# EUROPÄISCHE PATENTSCHRIFT

(11) **EP 1 833 145 B1**
(45) Veröffentlichungstag und Bekanntmachung des Hinweises auf die Patenterteilung: **16.05.2012**
(21) Anmeldenummer: 07004626.3
(22) Anmeldetag: 07.03.2007
(51) Int. Cl.: H02K 15/02, H02K 1/12

(54) **Verfahren, Werkzeug und Vorrichtung zur Produktion von Lamellenpaketen sowie Lamellenpaket**
Method, tool and device for producing a stack of laminations and stack of laminations
Procédé, outil et dispositif destinés à la production de paquets de tôles et un paquet de tôles

(30) Priorität: 10.03.2006 EP 06075582
(43) Veröffentlichungstag der Anmeldung: 12.09.2007
(73) Patentinhaber: Kienle + Spiess GmbH, 74343 Sachsenheim (DE)
(72) Erfinder: Blocher, Daniel, 71665 Vaihnigen (DE); Bauer, Steffen, 74374 Zaberfeld (DE)
(74) Vertreter: Jackisch-Kohl, Anna-Katharina

(56) Entgegenhaltungen:
- WO-A-97/01393
- DE-A1- 3 535 573
- JP-A- 3 174 927
- JP-A- 61 135 348
- JP-A- 2001 321 850
- JP-A- 2002 151 339
- JP-A- 2005 269 732

## Beschreibung

### Sachgebiet/Zusammenfassung des Allgemeinwissens

1. Die Erfindung betrifft ein Verfahren zur Herstellung von Lamellenpaketen nach dem Oberbegriff des Anspruches 1.
2. In elektrischen Maschinen werden häufig Kerne aus gestapelten Lamellen eingesetzt, die aus ausgeschnittenen Elektroblechen hergestellt werden. Üblicherweise wird eine Stanzpresse verwendet, um die einzelnen Lamellen auszuschneiden. Die Herstellung des Kerns oder des Pakets kann auf verschiedene Arten erfolgen, die mechanisches Zusammenfügen der Teile in der Presse zur Bildung von Kernen, Schweißen, Kleben oder mechanisches Fügen der Lamellen zu Paketen außerhalb der Presse einschließt.

### Hintergrund der Erfindung / Stand der Technik

3. Beispiele früherer Patente auf dem Gebiet der Herstellung von Paketen außerhalb von Werkzeug und Presse werden in der DE 24 46 693 angegeben. Diese Druckschrift beschreibt, wie Pakete aus Stahl hergestellt werden, der eine warmaushärtende Beschichtung aufweist. Die EP 0 121 173 beschreibt einen Lösungsansatz, bei dem die Lamellen mit Erhebungen und Vertiefungen versehen sind, mittels derer die Lamellen zum Paket zusammengedrückt werden. Dieses sogenannte Verknüpfungsverfahren ist mit einigen Nachteilen verbunden:
   a. Die Verknüpfungstechnik erfordert die Herstellung sehr komplexer Werkzeuge, deren Teile sehr empfindlich hinsichtlich der Werkstoffqualität sind und weniger robust als Werkzeuge sein können, mit denen die Lamellen nicht miteinander verknüpft werden. Dies erhöht sowohl die Kosten als auch die mit dem Verfahren verbundenen Risiken, was die Tauglichkeit erschweren kann.
   b. Sehr dünne Stahlbleche, z.B. mit weniger als 0,35 mm, können nur sehr schwierig verknüpft werden, was zu wenig leistungsfähigen Verfahren führt.
   c. Einige Erzeugnisse erfordern eine Drehung jeder Lamelle um einen bestimmten Betrag. Bei einem Paket, dessen Lamellen nicht miteinander verknüpft sind, ist der Drehwinkel durch die Anzahl der vorhandenen Verknüpfungsstellen begrenzt, d.h. bei vier vorhandenen Verknüpfungspunkten ist der kleinstmögliche Drehwinkel 90°.
   d. Ein weiterer Nachteil der gegenwärtigen Verknüpfungstechnik liegt darin, dass Werkstoffe unterschiedlicher Dicke oder Eigenschaften (oft durch unterschiedliche Qualitätsbezeichnungen gekennzeichnet) nicht zusammengefügt werden können.
4. Es sind auch andere Techniken versucht worden, die mit einem von außen aufgebrachten Klebstoff arbeiten. Beispiele dafür sind DE 35 35 573 und DE 203 18 993, welche beide ein Verfahren zur Verwendung eines Klebers beschreiben, der auf die Bandoberfläche aufgebracht wird. Die Nutzung kapillaren Klebens, d.h. eine Klebe"naht" die Außenkante des Paketes hinablaufen zu lassen, ist ebenfalls erprobt worden.
   Es sind auch Verfahren bekannt (JP 2005 269 732), bei denen auf gestanzte Lamellen ein Klebstoff in Punkt- oder in Linienform aufgebracht wird. Der Auftrag des Klebstoffes erfolgt mittels eines Auftragkopfes, der mehrere Düsen enthält. Bei einem anderen Verfahren (JP 2001 321 850) wird der Klebstoff an vorgegebenen Positionen auf die Lamellen aufgesprüht. Die für den Klebstoffauftrag vorgesehene Auftrageinheit hat ein Verteilerstück mit drei Düsen, aus denen der Klebstoff austritt. Mit den Düsen ist eine Variation der Tropfengröße sowie der Anzahl der Klebstoffpunkte auf den Lamellen nicht möglich.
5. Mit den verschiedenen vorhandenen Technologien zum Aufbringen von Klebstoff auf die Bandoberfläche als integrierter Teil der Kernherstellung sind verschiedene Schwierigkeiten verbunden:
   a. Die möglichen Pressengeschwindigkeiten sind durch die Geschwindigkeit des Kleberauftrags eingeschränkt. Zum Beispiel werden in DE 203 18 993 Geschwindigkeitsbereiche bis zu 200-300 Hübe pro Minute definiert. Für eine kostengünstige Kernproduktion müssen Pressengeschwindigkeiten bei mindestens 400 Hüben pro Minute liegen, wobei typische Werte von über 600 Hüben pro Minute sehr erwünscht sind.
   b. Es ist schwierig, das Werkzeug sauber zu halten. Zum Beispiel ist bei einer der Technologien eine Losgrößengrenze von einigen Tausend Hüben wahrscheinlich, nach denen das Werkzeug gewartet und gereinigt werden muss. Das normale Wartungsintervall für ein Hartmetallwerkzeug liegt bei einem Minimum von 2 000 000 Schlägen. Verkürzte Laufzeiten treiben die Produktionskosten deutlich in die Höhe.
   c. Bestehende Systeme wie in DE 20 31 899 sind dafür bekannt, Probleme mit dem Verschleiß von Bauteilen zu haben.
      (a), (b) und (c) beziehen sich sämtlich auf die Tatsache, dass die Aufbringung des Klebers auf dem Kontakt zwischen der Auftrageinheit und dem Streifen beruht.
   d. Die mittels einiger Klebetechniken hergestellten Pakete können variable / unzuverlässige Festigkeiten des Pakets aufweisen.
   e. Die Kosten von Werkzeugen mit integrierten Auftrageinheiten können wesentlich höher als die von Standardwerkzeugen sein.
   f. Die Technologie des in ein Werkzeug integrierten Auftragsystems kann normalerweise nicht bei bereits vorhandenen Werkzeugen angewandt werden.
6. Ein Vorteil, den das Kleben gegenüber anderen Fügetechniken bietet, liegt darin, dass zwischen den Lamellen in einem Paket kein elektrischer Kontakt stattfindet. Mit Techniken, wie dem Verknüpfen oder Schweißen, wird ein Kontakt hergestellt. Dies erhöht mögliche Verluste im fertigen Motor, insbesondere bei hohen Frequenzen. Ein zuverlässiges Klebeverfahren hätte zwei Vorzüge: Entweder wird der Wirkungsgrad des Motors bei einer gegebenen Paketgröße verbessert, oder es könnte ein kleinerer Motor eingesetzt werden, um die gleiche Ausgangsleistung zu erzielen wie ein größeres geschweißtes / verknüpftes / oder nach einem anderen kontaktierenden Fügeverfahren hergestelltes Paket.
7. Ein anderes Problem, das während des Stanzens der Lamellenteile auftreten kann, ist das Austreten von Materialstücken, oft als "Schrott" bekannt, zurück in den Schneidebereich des Werkzeugs. Dies kann Beschädigungen des Werkzeugs verursachen, was wiederum zu Verlustzeiten führen kann, wenn die Werkzeuge repariert werden müssen.

### Allgemeine Beschreibung der Erfindung

8. Die Erfindung ermöglicht, Pakete ausreichend hoher Festigkeit als Integrierten Teil der Pressenoperation bei wirtschaftlich konkurrenzfähigen Geschwindigkeiten herzustellen.
9. Bei dieser Erfindung wird das einlaufende Material einer Ausgleichswalze, dann einer Zuführung, dann der Presse und dann dem Werkzeug zugeführt. Das Ausgangsmaterial des Prozesses wird üblicherweise in Form von Coils geliefert, jedoch ist es auch möglich, geschnittene Streibestimmter Länge zu verwenden. Jede Materialdicke, die von einer Presse gestanzt werden kann, kann beim Einsatz dieser Technik gefügt werden. Insbesondere dünne Werkstoffe, üblicherweise mit weniger als 0,5 mm Dicke, profitieren vom Einsatz des Klebens als Fügetechnik wegen der Verringerung der Genauigkeit der Werkzeuge und Maschinen, die normalerweise für diese dünneren Werkstoffe erforderlich ist. Mit dem Verfahren können Werkstoffe unterschiedlicher Qualität, Dicke, Eigenschaften und Beschichtung verarbeitet werden. Es ist sogar möglich, Werkstoffe unterschiedlicher Qualität, Dicke, Eigenschaften und Beschichtung in demselben Paket zusammenzufügen.

Bei diesem Prozess wird der Kleber in kleinen Punkten auf die obere und/oder untere Seite des Streifens verteilt. Die Auftrageinrichtung kommt mit dem Streifen nicht in Berührung. Die Umgebung innerhalb des Werkzeugs und der Presse kann dadurch sauberer gehalten werden. Die Einrichtung selbst begünstigt eine Art von gespritztem Auftrag des Klebers aus der Distanz. Die Größe jedes Klebepunktes wird von der Auftrageinrichtung gesteuert. Die Anzahl der pro Teil eingesetzten Punkte kann variiert werden, um, falls gewünscht, Variationen der Paketfestigkeit zu ermöglichen.

Der Kleber kann vor dem Werkzeug (innerhalb der Presse) mit einer externen Ausrüstung oder innerhalb des Werkzeugs selbst mittels eines integrierten Systems aufgebracht werden. Es gibt verschiedene Möglichkeiten, wo genau der Kleber verteilt wird.

Die Klebepunkte werden so aufgetragen, dass sie auf der gestanzten Lamelle an für die Paketanordnung geeigneten Stellen platziert werden. Wenn das Auftragsystem irgendwo vor der Paketanordnung und der Aushärtestelle des Klebers angeordnet ist, wird eine Änderung des Werkzeugs erforderlich, um zu verhindern, dass die Klebepunkte berührt und somit vom Werkzeug beschädigt werden, bevor das Paket zusammengestellt wird. Die vorliegende Erfindung erlaubt die Produktion sehr kleiner oder komplexer Teile durch Einsatz der Klebetechnik, weil nur sehr kleine Aussparungen im Stempel, der Abstreiferplatte oder der Matrizenoberfläche benötigt werden.

Der Streifen wird in einzelne Lamellen mit Klebepunkten an geeigneten Stellen gestanzt. Das Paket wird in der Matrize zusammengefügt. Der Druck der letzten Stanzung und eine Bremse gewährleisten eine gute Verbindung zwischen den Lamellen. Dieser hohe Druck ist für eine gleichmäßige Aushärtung des Klebers wesentlich, die ihrerseits eine gleichmäßige Paketfestigkeit über die Lamellen liefert.

Eine Option ist, die Verteilung des Klebers so zu steuern, dass sie unterbrochen wird, wenn ein neues Paket angefangen werden soll. Diese Steuerung kann mit der Pressensteuerung verknüpft werden, z.B. so dass das Verteilen von Klebepunkten nach einer festgelegten Anzahl von Schlägen verhindert wird. Dies würde die Fertigung von Lamellen ohne Kleber ergeben und so den Anfang eines neuen Pakets in der Bremse erleichtern.

Ein klarer Vorteil dieser Technik besteht darin, dass sie nicht auf einer physischen Verbindung zum Zusammenfügen der Teile beruht. Daher kann die Drehung aufeinanderfolgender Lamellen unter jedem für das Erzeugnis erforderlichen Winkel erfolgen.

Es ist möglich, die Klebetechnik einzusetzen, um Klebepunkte auf Bereiche des Streifens aufzubringen, die nicht auf der fertigen Lamelle erscheinen. Dieser Prozess könnte für Teileformen Verwendung finden, die nach dem Stanzen Abfallteile bilden, die aus der Matrize austreten und zurück in das Werkzeug gelangen können und dadurch möglicherweise langdauernde Betriebsstörungen hervorrufen. Obwohl der Kleber in den frühen Stadien des Stanzens nicht voll ausgehärtet ist, ist die Haftung zwischen den einzelnen Abfallteilen ausreichend, um zu verhindern, dass sie in das Werkzeug zurückgelangen. Dieses Problem bezieht sich sowohl auf bestimmte Werkstoffe als auch auf bestimmte Formen. Deshalb steigert die vorliegende Erfindung entscheidend die Zahl der Pakettypen, die innerhalb eines Werkzeugs zusammengestellt werden können.

Eine Variante dieser Technologie ermöglicht die Nachrüstung vorhandener Folgewerkzeuge, die nur zur Herstellung loser Lamellen konstruiert worden sind, und ermöglicht so die Nutzung der Erfindung ohne die Kosten für den Bau eines neuen Werkzeugs. Die Erfindung wandelt daher ein Werkzeug für lose Lamellen in ein Werkzeug zur Herstellung von Lamellenpaketen um. Solche Werkzeuge zur Herstellung von Lamellenpaketen waren bisher nur in Verbindung mit der Verknüpfungstechnik einsetzbar.

Die Herstellungskosten für ein neues Werkzeug mit dieser Technologie sind bedeutend niedriger als die Kosten eines Werkzeugs, mit dem die Lamellen im Paket verknüpft werden. Dies beruht auf einer Reduzierung der benötigten Gesamtwerkzeuglänge und auf der geringeren Zahl an notwendigen Verknüpfungselementen auf den Lamellen. Diese einfacheren Werkzeuge können auch in Pressen mit kürzerem Bett eingesetzt werden und ermöglichen niedrigere Betriebs- und Rüstkosten. Die Reduzierung aktiver Teile in der Presse führt zu niedrigeren Wartungs- und Reparaturkosten.

Die einzige Geschwindigkeitsbeschränkung, der eine Presse bei Einsatz dieser Technologie unterliegt, sind die Geschwindigkeit des Kleberauftragsystems und die Aushärtezeit des Klebers in der Bremse. Eine längere Bremse erlaubt, soweit erforderlich, eine längere Aushärtezeit. Deshalb bietet diese Technologie die Möglichkeit, Pressen mit bei Weitem interessanteren Geschwindigkeiten zu betreiben als mit anderen Stanzpaketier-Technologien.

### Kurze Beschreibung der Zeichnungen

Zum besseren Verständnis der Beschreibung eines erfindungsgemäßen Ausführungsbeispiels dienen folgende Zeichnungen:
- **Fig. 1.**: Eine schematische Darstellung einer Stanzpresse mit einem Werkzeug zur Herstellung von Lamellenstapeln.
- **Fig. 2.**: Eine Zeichnung der wichtigen Funktionsstellen im Werkzeug.
- **Fig. 3.**: Ein Detail einer möglichen Anordnung des Auftragsystems.
- **Fig. 4.**: Eine schematische Darstellung der Auftragsoptionen und der Auftragführungsplatte.
- **Fig. 5.**: Eine schematische Darstellung der Abwandlungen am Werkzeug als Teil dieser Technik und der zur Zusammenstellung der gestanzten Stapel verwendeten Bremse, in der ein gefertigtes Paketteil gezeigt wird.
- **Fig. 6.**: Eine schematische Darstellung der zur Herstellung von Ker-Stapel vorbestimmter Länge erforderlichen Ausrüstung.

### Beschreibung eines Ausführungsbeispiels der Erfindung im Einzelnen

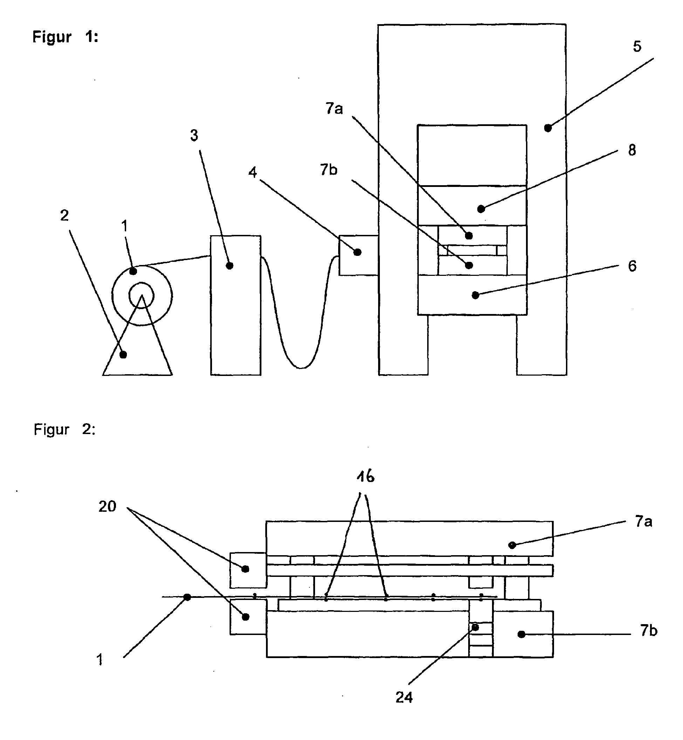

Im Folgenden wird im Einzelnen beschrieben, wie diese Technologie angewendet werden könnte. Die Zeichnungen, auf die Bezug genommen wird, sind die oben angegebenen Fig. 1 bis 6. Alle Bezugszeichen finden sich in den Zeichnungen.

Fig. 1 zeigt eine schematische Darstellung einer Stanzpresse. (1) ist der Coil des Ausgangsmaterials auf dem Abwickler (2). Man erkennt, wie das Material durch eine Ausgleichswalze (3) und dann in die Vorschubeinrichtung (4) sowie in das Pressengestell (5) geführt wird. Das Werkzeug sitzt auf dem Pressentisch (6) und besteht aus zwei Teilen, dem Oberteil (7a) und dem Unterteil (7b). Der obere Balken (8) der Presse bewegt sich auf und ab, um den Streifen in Lamellen zu stanzen.

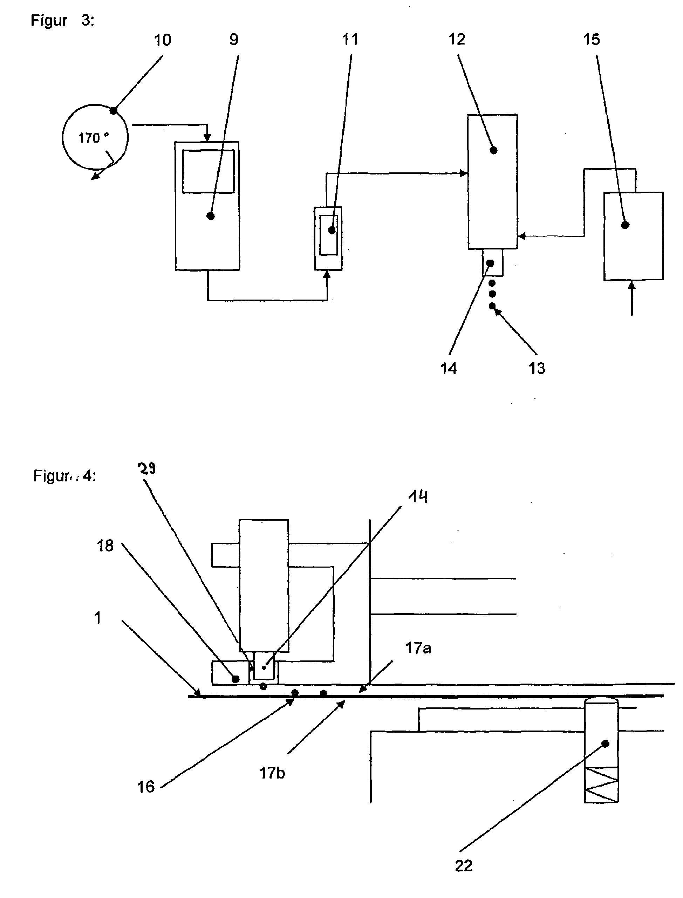

Einige weitere Einzelheiten der Anordnung der Schlüsselelemente im Pressengestell sind schematisch in Fig. 2 angedeutet. Bei diesem Beispiel ist die Auftrageinheit an der Vorderseite des Werkzeugs angeordnet und kann entweder am Ober- (7a) oder am Unterteil (7b) des Werkzeugs befestigt werden. Das Auftragventil arbeitet berührungslos, vorzugsweise mit Piezotechnik.
Auf das streifenförmige Ausgangsmaterial (1) wird vor dem Eintritt in die Presse (7) bzw. zwischen dem Oberteil (7a) und dem Unterteil (7b) der Klebstoff in Form der Klebstoffpunkte (16) aufgebracht.
Die Presse (8) ist an eine Steuerung (9) angeschlossen, die ein Steuersignal pro Pressenhub an eine Steuerung (11) einer Kleberauftrageinheit (12) sendet. Das Signal in der Steuerung (11) der Kleberauftrageinheit sendet einen elektrischen Stromimpuls an einen Piezokristall, der dann einen mit dem den Kleberauftrag steuernden Ventil verbundenen Aktor betätigt. Das Ventil öffnet eine kurze, festgelegte Zeit und der Klebstoff (13) wird unter Druck auf die Streifenoberfläche aufgetragen. Im Beispiel kann der Auftragkopf (14) von der Streifenoberfläche einen Abstand von etwa 0,1 bis etwa 5 mm haben. Das Timing des Signals ist sehr wichtig. Das Timing ist erforderlich, damit der Klebstoff während des richtigen Abschnitts des Pressenhubes aufgetragen wird, wenn sich das Material momentan in Ruhe befindet. Der Klebstoff selbst wird in einem Behälter (15) benachbart zur Presse gelagert. Es kann Druck aufgebaut werden, um die Förderung des Klebstoffs vom Tank zum Auftragkopf zu unterstützen. Die frisch aufgebrachten Klebepunkte (16) (Fig. 4) liegen dann entweder auf der Oberseite (17a) oder der Unterseite (17b) des Streifens (1). Es gibt mehr als ein Auftragsystem, um die Klebepunkte auf den Streifen aufzubringen. Welches Ventilsystem auch verwendet wird, es muss gewährleisten, dass der Klebstoff auf die Sollstellen auf dem Streifen aufgebracht wird.
Die Auftrageinheit (12) muss ihre Signale nicht von der Pressensteuerung (9) erhalten; sie kann ihre Signale auch von einer anderen Steuerung zugeführt bekommen.

Die Anzahl der für eine Lamelle benötigten aufgebrachten Klebepunkte hängt von verschiedenen Faktoren ab, einschließlich der Größe der Lamelle, ihrer Form und der erforderlichen Paketfestigkeit. Falls das Kleben wie in dem in Fig. 4 dargestellten Beispiel außerhalb des Werkzeugs stattfindet, ist es erforderlich, die gewünschte Position des Klebstoffauftrags in Bezug auf die Lage des gestanzten Teiles im Werkzeug zu berechnen. Die Auftraganordnung wird für ein gegebenes Lamellendesign als Zahl der benötigten Auftragköpfe angesetzt. Dann wird vom Werkzeug eine vorgegebene Anzahl von "Vorschubschritten" zurücktransferiert, wobei ein Vorschubschritt die Distanz ist, um die sich das Material bei jedem Pressenhub bewegt. So kann die Positionierung des außerhalb des Werkzeugs aufgebrachten Klebstoffs in Bezug auf das Teil innerhalb des Werkzeugs sicher bestimmt werden. Die Auftrageinheit (12) wird an das Werkzeug durch eine Stützvorrichtung angeschlossen. Sie verbleibt an dem einzelnen Werkzeug und ist zur Fixierung der Auftrageinheit in der für dieses Werkzeug richtigen Platzierung ausgebildet. Die Auftrageinheit selbst kann jedoch von der Stützvorrichtung gelöst und so mit jedem anderen Werkzeug verwendet werden. Eine Führungsplatte (18) kann in die Vorrichtung integriert sein, um zur Positionierung des Klebstoffpunktes beizutragen. Die Führungsplatte (18) hat wenigstens eine Öffnung (29), in welche der Auftragkopf (14) eingreift. Das streifenförmige Ausgangsmaterial (1) bewegt sich unterhalb der Führungsplatte (18). Die aus dem Auftragkopf (14) austretenden Klebstoffpunkte (16) gelangen auf die Oberseite des streifenförmigen Ausgangsmaterials (1). Zusätzlich zum Auftrag von Klebstoff, um die Zusammenstellung des Paketes zu erleichtern, können Klebepunkte dazu eingesetzt werden, um zu gewährleisten, dass Abfallteilchen, die in das Werkzeug zurückgetragen werden können, nach dem Stanzen vom Werkzeug abgezogen werden.

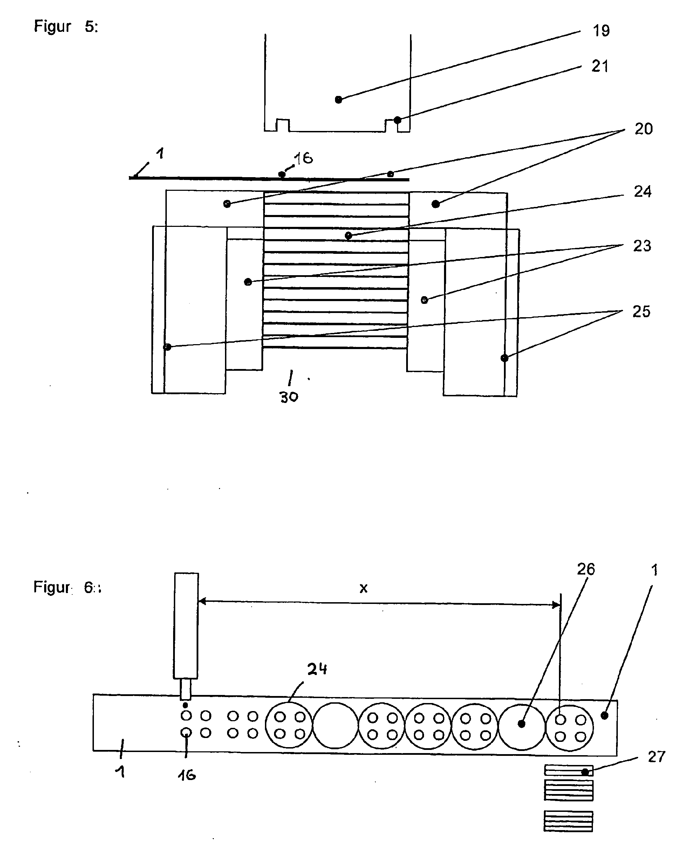

Bei diesem Beispiel, in dem der Klebstoff vor dem Werkzeug aufgebracht wird, bewegen sich die Klebstoffpunkte mit der fortschreitenden Bewegung des Streifens in das Werkzeug hinein. Oberteil (7a) und Unterteil (7b) des Werkzeugs sind so gestaltet, dass die Berührung von Klebstoffpunkten mit Werkzeugteilen vermieden wird, wenn der Streifen durch die Presse wandert. Fig. 5 zeigt dies im Detail. Die Modifikation kann die Form kleiner Aussparungen (21) in der Oberfläche der Abstreiferplatte oder des Stempels (19) annehmen (wenn der Klebstoff auf die Oberseite aufgetragen wird) oder in der Oberfläche der Matrize (20) (wenn der Klebstoff auf die Unterseite aufgebracht wird). Es ist auch möglich, einen durchgehenden Kanal im Werkzeug zu verwenden. Dies hat jedoch den Nachteil, dass es nicht möglich ist, über sehr kleine oder komplexe Teile Kanäle zu ziehen. Daher sind kleine, nur etwas größere Ausschnitte (21) als der Klebstoffpunkt selbst die bevorzugte Methode. Wenn der Streifen (1) durch die Presse wandert, nehmen die Ausschnitte (21) die Klebstoffpunkte (16) auf. Die Aussparungen (21) sind so groß, dass das Werkzeug beim Stanzvorgang die Klebepunkte (16) nicht berührt. Dadurch ist sichergestellt, dass die ausgestanzten Lamellen nicht am Werkzeug hängen bleiben. Die Anordnung der Aussparungen richtet sich nach der Anordnung der Klebepunkte (16) auf der auszustanzenden Lamelle. Wenn sich der Klebstoff auf der Oberseite befindet, wird er nicht berührt, weil sich die Abstreiferplatte zwischen jedem Pressenhub anhebt. Wenn der Klebstoff an der Unterseite ist, wird ein Kontakt durch Streifenhebefedern (22) vermieden, die den Streifen während jeder Streifenbewegung von der Werkzeugoberfläche abheben. Die Steifenhebefedern (22) sind so vorgesehen, dass sie beim Abhebevorgang nicht auf die Klebepunkte (16) auf dem streifenförmigen Ausgangsmaterial treffen.

Die Lamelle wird in mehreren Schritten gestanzt. Im letzten Schritt wird die Lamelle vom Rest des Streifens getrennt. Dies findet oberhalb der Bremse (23) statt. Das Paket wird in der Bremse zusammengestellt. Die Bremse (23) befindet sich in einem schachtartigen Raum (30), in dem die Lamellen (24) zu Paketen zusammengestellt werden. Damit die gestanzten Lamellen nicht durch den Schacht (30) nach unten fallen, ist die Bremse (23) vorgesehen. Sie kann beispielsweise durch Teilringe gebildet werden, deren Innendurchmesser geringfügig kleiner ist als der Außendurchmesser der gestanzten Lamellen. Dadurch werden die Lamellen (24) durch die Bremse (23) im Schacht (30) gehalten. Mit dem Stempel (19) wird nach jedem Stanzvorgang die nächste Lamelle auf die in der Bremse (23) befindliche Lamelle gedrückt. Die von der Bremse (23) ausgeübte Bremskraft ist so groß, dass beim Aufdrücken der jeweils nächsten Lamelle (24) auf den schon gebildeten Teil des Paketes eine sichere Verklebung der aufeinanderliegenden Lamellen (24) gewährleistet ist. Die von dem Stempel (19) ausgeübte Kraft ist über die Lamelle hinweg gleichmäßig. Daher herrscht ein ausgeglichener Kontakt über die Lamelle hinweg sowie ein hoher Druck, der eine gleichmäßige Verbindung begünstigt. Die zum Aushärten verfügbare Zeit ist abhängig vom Abstand der Matrize (20) vom Ende der Bremse. Je länger die Bremse (23) in Längsrichtung des Schachtes (30) ist, desto länger ist die Zeit, in der sich die zusammengedrückten Lamellen (24) in der Bremse (23) befinden. Dadurch steht mehr Zeit zum Aushärten des Klebstoffs zur Verfügung.

Um eine Relativdrehung der einzelnen Lamellen (24) innerhalb des Paketes zu ermöglichen, kann die Matrize so konstruiert werden, dass sie mit jedem Pressenhub gedreht werden kann. Zu diesem Zweck stehen viele Systeme zur Verfügung. Ein Beispiel ist der Einsatz eines Systems von Rad und Riemen (25). Mittels dieses Rad-Riemen-Antriebes kann die Matrize (20) mit der Bremse (23) um die Längsache gedreht werden. Da das Teilpaket in der Bremse (23) gehalten wird, wird auf diese Weise auch dieses Paket um den entsprechenden Winkel gedreht. Die Drehung erfolgt, bevor die nächste ausgestanzte Lamelle mittels des Stempels (19) auf das Teilpaket in der Bremse (23) gedrückt wird. Da die einzelnen Lamellen nicht formschlüssig über Warzen, teilweise herausgestanzte Zungen und dergleichen formschlüssig miteinander verbunden sind, kann der Drehwinkel optimal an den Einsatzfall des hergestellten Lamellenpaketes angepasst werden. Jeder Drehwinkel ist möglich, da keine physischen Beschränkungen dafür vorliegen, wie die Lamellen zusammenpassen. Dies ist ein Unterschied zu Systemen, bei denen die Lamellen im Paket untereinander mittels Warzen, Zungen oder dergleichen fest verbunden sind (Verknüpfungstechnik).

Bei Anwendung des beschriebenen Beispiels gibt es mehrere Methoden, die gewünschte Paketlänge in dieser Technik zu gewährleisten. Anhand von Fig. 6 wird eine Möglichkeit beschrieben, wie die Zufuhr von Klebstoff auf den Steifen in festgelegten Intervallen unterbrochen werden kann. Fig. 6 zeigt das streifenförmige Ausgangsmaterial (1), auf das die Klebepunkte (16) aufgebracht werden. Beispielhaft sind pro Lamelle (24) vier Klebepunkte (16) vorgesehen. Die mit Klebepunkten versehenen Lamellen werden im Schacht (30) (Fig. 5) zum Paket (27) (Fig. 6) zusammengefügt. In diesem Falle wird die Zufuhr von Klebstoff zum Streifen (1) in festgelegten Intervallen unterbrochen. Auf diese Weise werden Lamellen erzeugt, die auf ihrer Oberseite (26) keine Klebstoffpunkte (16) aufweisen. Diese Lamellen haften nicht an die vorhergehende Lamelle in der Matrize. Durch diese nicht mit Klebstoffpunkte versehenen Lamellen wird die Höhe des Paketes (27) bestimmt. Da im Beispielsfall jede vierte Lamelle keine Klebstoffpunkte aufweist, werden im Schacht (30) Pakete (27) gebildet, die aus vier aufeinander sitzenden Lamellen bestehen. In dem Augenblick, in dem auf die oberste Lamelle des Teilpaketes die keine Klebstoffpunkte aufweisende Lamelle aufgedrückt wird, hat das Paket (27) die gewünschte Höhe und wird in bekannter Weise aus dem Schacht (30) später ausgestoßen und einer Transporteinrichtung zugeführt, mit der dieses Paket abtransportiert wird. Nunmehr wird im Schacht (30) das nächste Paket aus vier Lamellen gebildet. Sobald auf dieses Teilpaket die nicht mit Klebstoffpunkten versehene Lamelle aufgedrückt wird, hat das Paket wiederum die gewünschte Höhe und wird später ausgestoßen. Auf diese Weise kann sehr einfach die Pakethöhe bestimmt werden.

Die nicht mit Klebstoffpunkten versehenen Lamellen müssen nicht in gleichmäßigen Zeitintervallen aus dem Blech (1) gestanzt werden. Der Klebstoffauftrag kann so gesteuert werden, dass die Unterbrechung der Klebstoffzufuhr in unterschiedlichen Zeitintervallen erfolgt. Dementsprechend ist die Zahl der mit Klebstoffpunkten versehenen Lamellen im Paket (27) in einem Falle größer, im anderen Falle kleiner.

## Patentansprüche

1. Verfahren zur Herstellung von Lamellenpakten von kontrollierter Höhe in einem Werkzeug (7a, 7b), mit dem Lamellen (24) gestanzt werden, auf die Klebstoff aufgebracht und die zum Lamellenpaket (27) zusammengeklebt werden, wobei der Klebstoff partiell und berührungslos auf die Ober- und/oder Unterseite der Lamelle (24) aufgebracht wird,
**dadurch gekennzeichnet, dass** der Klebstoff mit einem Auftragsystem aufgebracht wird, das aus einer Auftrageinheit (12) und einer Steuerung (11) für die Auftrageinheit (12) besteht, die aus wenigstens einem berührungslos arbeitenden Auftragkopf (14) und aus einem gesteuerten Ventil besteht, dass zum Auftrag mehrerer Klebepunkte (16) mehrere Auftragsysteme eingesetzt werden, dass der Steuerung (11) der Auftragsysteme ein Steuersignal pro Pressenhub gesendet wird, und dass die Anzahl der pro Werkstückteil eingesetzten Klebstoffpunkte (16) zur Variation der Paketfestigkeit variiert wird.

2. Verfahren nach Anspruch 1,
**dadurch gekennzeichnet, dass** der Klebstoff mit einem auf Piezotechnik basierenden System aufgetragen wird.

3. Verfahren nach Anspruch 1 oder 2,
**dadurch gekennzeichnet, dass** das Ausgangsmaterial (1) ein fortlaufender Streifen ist, der in Form eines Coils geliefert wird.

4. Verfahren nach Anspruch 1 oder 2,
**dadurch gekennzeichnet, dass** das Ausgangsmaterial (1) in Form einzelner Bleche geliefert wird.

5. Verfahren nach einem der Ansprüche 1 bis 4,
**dadurch gekennzeichnet, dass** die Lamellen (24) während des Aufbaus des Paketes (27) gedreht werden, um gewendelte Pakete in jedem gewünschten Steigungswinkel zu bilden.

6. Verfahren nach einem der Ansprüche 1 bis 5,
**dadurch gekennzeichnet, dass** Werkstoffe unterschiedlicher Qualität, Dicke, Eigenschaften und Beschichtung verarbeitet werden.

7. Verfahren nach einem der Ansprüche 1 bis 6,
**dadurch gekennzeichnet, dass** Werkstoffe unterschiedlicher Qualität, Dicke, Eigenschaften und Beschichtung in demselben Paket zusammengefügt werden.

8. Verfahren nach einem der Ansprüche 1 bis 7,
**dadurch gekennzeichnet, dass** auf nicht für die Verwendung als Lamellen vorgesehenes Rohmaterial Klebstoff aufgebracht wird, um die Entfernung solchen Abfalls aus dem Werkzeug zu erleichtern.

9. Verfahren nach einem der Ansprüche 1 bis 8,
**dadurch gekennzeichnet, dass** kleine Aussparungen (21) in das Werkzeug (7a, 7b), eine Abstreiferplatte oder eine Matrize (20) eingearbeitet sind, um den aufgetragenen Klebstoff unterzubringen.

10. Verfahren nach einem der Ansprüche 1 bis 9,
**dadurch gekennzeichnet, dass** in einer Zusammenstellungskammer (30) für das Lamellenpaket (27) eine Bremse (23) eingesetzt wird.

11. Verfahren nach einem der Ansprüche 1 bis 10,
**dadurch gekennzeichnet, dass** der Klebstoffauftrag periodisch unterbrochen wird und in der Zusammenstellungskammer (30) unterschiedlich hohe Pakete (27) zusammengefügt werden.

12. Verfahren nach einem der Ansprüche 1 bis 11,
**dadurch gekennzeichnet, dass** der Klebstoffauftrag durch ein internes oder von außerhalb kommendes Signal unterbrochen wird.

## Claims

1. A method of producing lamina stacks of monitored height in a tool (7a, 7b), with which laminae (24) are punched, onto which laminae (24) adhesive is applied and which are stuck together to form the lamina stack (27), wherein the adhesive is applied in a partial and contactless manner to the upper side and/or underside of the lamina (24), **characterised in that** the adhesive is applied by an applying system consisting of an applying unit (12) and a control device (11) for the applying unit (12), which applying unit (12) consists of at least one contactlessly operating applying head (14) and a controlled valve, **in that** a plurality of applying systems are used to apply a plurality of adhesive dots (16), **in that** one control signal per press stroke is sent to the control device (11) of the applying systems, and **in that** the number of adhesive dots (16) used per workpiece part is varied to vary the stack strength.

2. A method according to claim 1, **characterised in that** the adhesive is applied by a system based on piezo technology.

3. A method according to claim 1 or 2, **characterised in that** the original material (1) is a continuous strip supplied in the form of a coil.

4. A method according to claim 1 or 2, **characterised in that** the original material (1) is supplied in the form of individual metal sheets.

5. A method according to any one of claims 1 to 4, **characterised in that** the laminae (24) are turned during construction of the stack (27), in order to form helical stacks at any desired angle of inclination.

6. A method according to any one of claims 1 to 5, **characterised in that** materials of different quality, thickness, properties and coating are worked.

7. A method according to any one of claims 1 to 6, **characterised in that** materials of different quality, thickness, properties and coating are joined together in the same stack.

8. A method according to any one of claims 1 to 7, **characterised in that** adhesive is applied to raw material not intended for use as laminae, in order to facilitate the removal of such waste from the tool.

9. A method according to any one of claims 1 to 8, **characterised in that** small recesses (21) are made in the tool (7a, 7b), a stripper plate or a die-plate (20), in order to accommodate the applied adhesive.

10. A method according to any one of claims 1 to 9, **characterised in that** a brake (23) is inserted in an assembly chamber (30) for the lamina stack (27).

11. A method according to any one of claims 1 to 10, **characterised in that** the adhesive application is periodically interrupted and stacks (27) of differing height are joined together in the assembly chamber (30).

12. A method according to any one of claims 1 to 11, **characterised in that** the adhesive application is interrupted by an internal signal or a signal coming from outside.

## Revendications

1. Procédé de fabrication de paquets de lamelles d'une hauteur contrôlée dans un outillage (7a, 7b), à l'aide duquel on découpe par matriçage des lamelles (24) sur lesquelles est appliquée une colle et qui sont collées ensemble en un paquet de lamelles (27), la colle étant appliquée partiellement et sans contact sur la face supérieure et/ou inférieure de la lamelle (24),
**caractérisé en ce que** la colle est appliquée à l'aide d'un système applicateur, qui est constitué d'une unité d'application (12) et d'une commande (11) pour l'unité d'application (12) formée par au moins une tête d'application (14) fonctionnant sans contact et par une vanne commandée, **en ce que** pour l'application de plusieurs points de colle (16), on met en oeuvre plusieurs systèmes applicateurs, **en ce que** l'on envoie à la commande (11) des systèmes applicateurs un signal de commande par course de presse, et **en ce que** l'on fait varier le nombre des points de colle (16) utilisés par pièce d'oeuvre pour faire varier la résistance du paquet.

2. Procédé selon la revendication 1,
**caractérisé en ce que** la colle est appliquée à l'aide d'un système basé sur une technique piézoélectrique.

3. Procédé selon la revendication 1 ou la revendication 2,
**caractérisé en ce que** le matériau de départ (1) est une bande continue, qui est fournie sous la forme d'une bobine.

4. Procédé selon la revendication 1 ou la revendication 2,
**caractérisé en ce que** le matériau de départ (1) est fourni sous la forme de tôles individuelles.

5. Procédé selon l'une des revendications 1 à 4,
**caractérisé en ce que** l'on fait tourner les lamelles (24) pendant la formation du paquet (27), pour former des paquets en hélice selon chaque angle d'inclinaison d'hélice souhaité.

6. Procédé selon l'une des revendications 1 à 5,
**caractérisé en ce que** l'on traite des matériaux qui diffèrent quant à leur qualité, leur épaisseur, leurs propriétés et leur revêtement.

7. Procédé selon l'une des revendications 1 à 6,
**caractérisé en ce que** l'on assemble dans le même paquet, des matériaux qui diffèrent quant à leur qualité, leur épaisseur, leurs propriétés et leur revêtement.

8. Procédé selon l'une des revendications 1 à 7,
**caractérisé en ce que** l'on applique de la colle sur du matériau brut non prévu pour l'utilisation en tant que lamelle, en vue de faciliter l'enlèvement de telles chutes de l'outillage.

9. Procédé selon l'une des revendications 1 à 8,
**caractérisé en ce que** de petits évidements (21) sont usinés dans l'outillage (7a, 7b), une plaque de raclage ou une matrice (20) pour loger la colle ayant été appliquée.

10. Procédé selon l'une des revendications 1 à 9,
**caractérisé en ce que** dans un compartiment d'assemblage (30) pour le paquet de lamelles (27), on met en oeuvre un frein (23).

11. Procédé selon l'une des revendications 1 à 10,
**caractérisé en ce que** l'on interrompt périodiquement l'application de colle, et l'on assemble des paquets (27) de hauteur différente dans le compartiment d'assemblage (30).

12. Procédé selon l'une des revendications 1 à 11,
**caractérisé en ce que** l'application de colle est interrompue par un signal interne ou venant de l'extérieur.
